# EUROPEAN PATENT SPECIFICATION

(11) **EP 2 154 744 B1**
(45) Date of publication and mention of the grant of the patent: **09.01.2013**
(21) Application number: 08753118.2
(22) Date of filing: 20.05.2008
(51) Int. Cl.: H01M 8/02, H01M 8/10

(54) **PROCESS FOR PRODUCING SOLID POLYMER ELECTROLYTE MEMBRANE, AND SOLID POLYMER ELECTROLYTE MEMBRANE**
PROZESS ZUR HERSTELLUNG EINER FESTPOLYMER-ELEKTROLYT-MEMBRAN UND FESTPOLYMER-ELEKTROLYTMEMBRAN
PROCÉDÉ DE FABRICATION D'UNE MEMBRANE ÉLECTROLYTIQUE POLYMÈRE SOLIDE, ET MEMBRANE ÉLECTROLYTIQUE POLYMÈRE SOLIDE

(30) Priority: 29.05.2007 JP 2007141797
(43) Date of publication of application: 17.02.2010
(73) Proprietor: W. L. Gore & Associates, Co., Ltd., Tokyo 108-0075 (JP)
(72) Inventor: ISHIKAWA, Masahiko, Tokyo 156-8505 (JP); TAKANE, Tomoyuki, Tokyo 156-8505 (JP)
(74) Representative: Shanks, Andrew
(86) International application number: PCT/JP2008/059611
(87) International publication number: WO 2008/146766

(56) References cited:
- GB-A- 2 091 166
- JP-A- 2000 510 510
- JP-A- 2005 162 784
- JP-A- 2005 327 500
- JP-A- 2006 049 002
- JP-A- 2006 253 124

## Description

### TECHNICAL FIELD

The present invention relates to a method of fabricating a solid polymer electrolyte membrane, a solid polymer electrolyte membrane, a membrane electrode assembly for use in a solid polymer fuel cell, and a solid polymer fuel cell.

### BACKGROUND ART

In recent years, fuel cells have been attracting attention as high-efficiency energy conversion devices. Fuel cells are roughly classified into two categories based on the type of electrolyte used: low-temperature operating fuel cells, such as alkaline fuel cells, solid polymer electrolyte fuel cells, and phosphoric acid fuel cells; and high-temperature operating fuel cells, such as molten carbonate fuel cells and solid oxide fuel cells. Among them, the solid polymer electrolyte fuel cell (PEFC) that uses an ionically conductive polymer electrolyte membrane as an electrolyte has been receiving attention as a power supply source for stationary use, automotive use, portable use, etc., because it is compact in construction, achieves high output density, does not use a liquid for the electrolyte, can operate at low temperatures, and can therefore be implemented in a simple system.

The basic principle of the solid polymer electrolyte fuel cell is that, with gas diffusion electrode layers disposed on both sides of the polymer electrolyte membrane, whose anode side is exposed to a fuel gas (hydrogen or the like) and whose cathode side to an oxidizer gas (air or the like), water is synthesized by a chemical reaction occurring across the polymer electrolyte membrane, and the resulting reaction energy is extracted as electrical energy. Since the thickness of the polymer electrolyte membrane greatly affects resistance, it is necessary that the thickness be made as small as possible. However, if the polymer electrolyte membrane is made too thin, defects can arise such as the formation of pinholes and potential damage to the membrane, eventually impairing the electronic insulation and gas impermeability of the polymer electrolyte membrane.

To enhance the chemical and mechanical stability of the polymer electrolyte membrane, a technique is known that reinforces the polymer electrolyte membrane with porous expanded polytetrafluoroethylene (PTFE) (Tokuhyou (Published Japanese Translation of PCT Application) No. H11-501964). According to Tokuhyou No. H11-501964, there is provided a reinforced polymer electrolyte membrane in the form of a composite membrane which is fabricated by immersing porous expanded PTFE in a solution of an ion-exchange material and then removing the solvent, leaving the ion-exchange material filled into the pores of the porous expanded PTFE.

Further, in order to achieve increased durability while reducing the thickness of the polymer electrolyte membrane, a technique is known that causes a polymer electrolyte precursor to melt and infiltrate into a porous expanded reinforcing member and thereafter transforms the precursor into a polymer electrolyte (Japanese Unexamined Patent Publication No. 2005-327500). According to Japanese Unexamined Patent Publication No. 2005-327500, there is provided a reinforced polymer electrolyte membrane of a composite structure in which the pores are densely filled with the electrolyte by causing the polymer electrolyte precursor whose melt viscosity is controlled to melt and infiltrate into the porous reinforcing member without using any solvent.

### DISCLOSURE OF THE INVENTION

The polymer electrolyte membrane disclosed in Tokuhyou No. H11-501964 or Japanese Unexamined Patent Publication No. 2005-327500 is intended primarily for use in a solid polymer fuel cell. It should be noted here that, in the case of a polymer electrolyte membrane used in a solid polymer fuel cell, since the polymer electrolyte membrane is held in a wet condition during operation and held in a relatively dry condition when not in operation, the polymer electrolyte membrane is repeatedly subjected to swelling and shrinking due to the dry/wet cycle associated with the starting and stopping of the operation. Further, in the case of a solid polymer fuel cell used in a cold district, the polymer electrolyte membrane may repeatedly undergo deformation due to the freeze/defreeze cycle associated with freezing that can occur when the operation is stopped. However, it has been found that the polymer electrolyte membrane reinforced by the method disclosed in Tokuhyou No. H11-501964 or Japanese Unexamined Patent Publication No. 2005-327500 is still short of achieving sufficient durability against such a dry/wet cycle or freeze/defreeze cycle.

Japanese Patent Application No. JP 2005-327500 (Oka Norotoshi) discloses a method of manufacturing a solid polymer electrolyte comprising impregnating an electrolyte precursor into a drawn porous reinforcing material.

Japanese Patent Application No. JP 2006-253124 (Otsuzumi Hiroshi) discloses a method of fabricating a polymer electrolyte composite film comprising impregnating a porous base material with a polymer electrolyte material solution, and heat treating the electrolyte composite film.

It is accordingly an object of the present invention to provide a method for fabricating a reinforced polymer electrolyte membrane having greatly enhanced durability against such a dry/wet cycle or freeze/defreeze cycle.

According to an aspect of the present invention, there is provided a method for fabricating a reinforced solid polymer electrolyte membrane according to the appended claims.

According to another aspect of the present invention, there is provided a solid polymer electrolyte membrane according to the appended claims.

According to another aspect of the present invention, there is provided a membrane electrode assembly for use in a solid polymer fuel cell, according to the appended claims.

According to another aspect of the present invention, there is provided a solid polymer fuel cell according to the appended claims.

### BEST MODE FOR CARRYING OUT THE INVENTION

A method for fabricating a reinforced solid polymer electrolyte membrane according to the first mode of the present invention includes the steps of: preparing a sheet-like porous reinforcing member and a polymer electrolyte precursor; obtaining a composite membrane in which at least a portion of the polymer electrolyte precursor is impregnated into the sheet-like porous reinforcing member so as to form a composite structure therewith by causing the polymer electrolyte precursor to infiltrate into the sheet-like porous reinforcing member, in the absence of a solvent, at a temperature higher than the melting point of the sheet-like porous reinforcing member but lower than the thermal decomposition temperature thereof; and transforming the polymer electrolyte precursor into a polymer electrolyte by hydrolyzing the polymer electrolyte precursor;

For the sheet-like porous reinforcing member, a material is used that can reinforce the solid polymer electrolyte membrane by the method of the present invention and that does not impair the effect and operation of the electrolyte membrane in each specific application. It is preferable to use for the sheet-like porous reinforcing member a material whose thermal decomposition temperature is generally 400°C or higher, and preferably 450°C or higher. It is also preferable to use for the sheet-like porous reinforcing member a material whose melting point is generally 380°C or lower, and preferably 330°C or lower. In the specification of the present invention, the melting point of the sheet-like porous reinforcing member refers to thermal absorption peak temperature as measured by differential scanning calorimetry (DSC), and in the case of a material that exhibits a plurality of thermal absorption peaks, it is defined as the peak temperature that first appears in the heating process. For example, porous expanded polytetrafluoroethylene (PTFE) exhibits two thermal absorption peaks, one near 327°C and the other near 340°C, as measured by DSC. It therefore follows that the melting point of the sheet-like porous reinforcing member comprising the porous expanded PTFE is about 327°C.

When using the reinforced solid polymer electrolyte membrane according to the present invention in a solid polymer fuel cell, it is preferable to use porous expanded PTFE as the material for the sheet-like porous reinforcing member. More specifically, it is preferable to use porous expanded PTFE having a porosity of 35% or higher, and more preferably a porosity of 50 to 97%. If the porosity is less than 35%, the amount of the polymer electrolyte impregnated therein is not sufficient and, in solid polymer fuel cell applications, for example, sufficient power generation performance cannot be obtained. Conversely, if the porosity exceeds 97%, sufficient reinforcement cannot be provided to the solid polymer electrolyte membrane. The average pore size of the porous expanded PTFE is generally in the range of 0.01 to 50 µm, preferably in the range of 0.05 to 15 µm, and more preferably in the range of 0.1 to 3 µm. If the average pore size is smaller than 0.01 µm, meltinfiltration of the polymer electrolyte precursor becomes difficult. Conversely, if the average pore size exceeds 50 µm, sufficient reinforcement cannot be provided to the solid polymer electrolyte membrane. The thickness of the porous expanded PTFE is generally in the range of 1 to 30 µm, and preferably in the range of 2 to 20 µm. The porous expanded PTFE particularly preferred for use as the sheet-like porous reinforcing member of the present invention is commercially available from Japan Gore-Tex Inc.

For the polymer electrolyte precursor, a material is used that infiltrates into the sheet-like porous reinforcing member by melting at a temperature lower than the thermal decomposition temperature of the reinforcing member. More specifically, for the polymer electrolyte precursor, it is preferable to use a material whose melting temperature is generally in the range of 100 to 300°C, and preferably in the range of 100 to 250°C, and that melts at a temperature lower than the thermal decomposition temperature of the sheet-like porous reinforcing member employed in each specific application. In the specification of the present invention, the melting temperature of the polymer electrolyte membrane refers to the temperature at which the material starts to flow when it is heated up under a constant shear rate, for example, 10s⁻¹. More specifically, it refers to the temperature at which the melt viscosity, under the shear rate of 10s⁻¹, lies in the range of 9,000 to 10,000 Pa·s. For the infiltration to proceed successfully, it is preferable that the melt viscosity of the polymer electrolyte precursor at the infiltration temperature is generally in the range of 2,000 to 12,000 Pa·s under the shear rate of 10s⁻¹. If the melt viscosity is lower than 2,000 Pa·s, the viscosity is too low, and a uniform membrane cannot be obtained. Conversely, if the viscosity exceeds 12,000 Pa·s, the polymer electrolyte precursor does not sufficiently infiltrate into the sheet-like porous reinforcing member. Preferred melt viscosity varies depending on the porosity and average pore size of the sheet-like porous reinforcing member employed in each specific application, but any person skilled in the art can appropriately set the melt viscosity within the above range. When using the polymer electrolyte precursor in the form of a membrane for infiltration, generally a membrane having a thickness of 2 to 50 µm should be prepared.

The polymer electrolyte precursor is one that contains a polymer expressed by the following general formula (1).

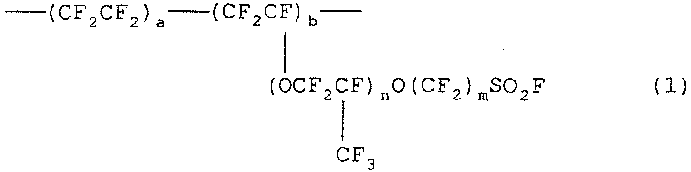

(In the above formula, a:b = 1:1 to 9:1, a+b = 100 or larger, m = 2 to 6, n = 0, 1, 2)

In the polymer electrolyte precursor expressed by the above general formula (1), the sulfonyl fluoride group (-SO₂F) at the end of the side chain is hydrolyzed with alkali, and is neutralized with an acid and converted to a sulfonic acid group (-SO₃H), thus transforming the precursor into a polymer electrolyte.

In the method of the present invention, since the polymer electrolyte precursor is directly caused to melt and infiltrate into the sheet-like porous reinforcing member, no solvent whatsoever for preparing the polymer electrolyte precursor in the form of a solution is used. If a solvent were used to assist the infiltration, microscopic gaps would occur between the polymer electrolyte precursor and the porous reinforcing member when removing the solvent, and the adhesion between the polymer electrolyte and the porous reinforcing member would decrease.

According to the first mode of the present invention, the polymer electrolyte precursor is caused to infiltrate into the sheet-like porous reinforcing member, in the absence of a solvent, at a temperature higher than the melting point of the sheet-like porous reinforcing member but lower than the thermal decomposition temperature of the sheet-like porous reinforcing member. The polymer electrolyte precursor can be caused to infiltrate into the sheet-like porous reinforcing member by first placing the polymer electrolyte precursor prepared in the form of a membrane onto the sheet-like porous reinforcing member and then heating them together at a prescribed temperature. It is also possible to promote the infiltration by heating the combined structure of the polymer electrolyte precursor and sheet-like porous reinforcing member while applying a pressure using, for example, a hot press. Alternatively, the polymer electrolyte precursor may be applied in the form of a membrane over the sheet-like porous reinforcing member while at the same time causing the former to infiltrate into the latter at a prescribed temperature by using, for example, a hot melt applicator. It is also possible to promote the infiltration by applying a reduced pressure or vacuum to the sheet-like porous reinforcing member during the infiltration. The number of polymer electrolyte precursor membranes and sheet-like porous reinforcing members to be stacked together is not limited to any specific number. A single polymer electrolyte precursor membrane and a single sheet-like porous reinforcing member may be stacked together, causing the former to infiltrate into the latter, and on top of that, an additional polymer electrolyte precursor membrane and/or an additional sheet-like porous reinforcing member may be placed to repeat the process of infiltration. Further, either the polymer electrolyte precursor membrane or the sheet-like porous reinforcing member or both may be prepared in multiple layers and may be stacked one on top of the other, causing the former to infiltrate into the latter in a single step.

According to the first mode of the present invention, the temperature at which the polymer electrolyte precursor is caused to infiltrate into the sheet-like porous reinforcing member is set higher than the melting point of the sheet-like porous reinforcing member but lower than the temperature at which the sheet-like porous reinforcing member thermally decomposes. When the polymer electrolyte precursor is caused to infiltrate at a temperature higher than the melting point of the sheet-like porous reinforcing member, the adhesion between the polymer electrolyte and the sheet-like porous reinforcing member markedly increases. While not wishing to be bound by any specific theory, the reason is believed to be that, with the sheet-like porous reinforcing member also caused to melt, the polymer chain of the polymer electrolyte precursor and the polymer chain of the sheet-like porous reinforcing member become entangled with each other at the molecular level during the infiltration step. The infiltration temperature according to the first mode of the present invention is determined by considering the thermal decomposition temperature and melting point of the sheet-like porous reinforcing member and the melting temperature of the polymer electrolyte precursor, as earlier described, and it should be set to at least 300°C, preferably 330°C or higher, and more preferably 340°C or higher. On the other hand, the time required to complete the infiltrating step varies depending on the characteristics such as the thickness, porosity, and average pore size of the porous reinforcing member in each specific application and on the physical properties such as the melt viscosity of the polymer electrolyte precursor and its infiltration temperature, but generally an infiltration time of 5 to 30 minutes will suffice for the purpose.

According to the first mode of the present invention, a composite membrane in which at least a portion of the polymer electrolyte precursor is impregnated into the sheet-like porous reinforcing member so as to form a composite structure therewith can be obtained by causing the polymer electrolyte precursor to infiltrate into the sheet-like porous reinforcing member as described above. The phrase "at least a portion" is intended to include not only the case where, on one or both surfaces of the polymer electrolyte precursor membrane, only a portion of the membrane in its thickness direction is impregnated into the porous reinforcing member so as to form a composite structure therewith, leaving behind other portions of the polymer electrolyte precursor membrane not forming a composite structure, but also the case where the entire portion of the polymer electrolyte precursor membrane in its thickness direction is impregnated into the porous reinforcing member so as to form a composite structure therewith. In the method of the present invention, since no solvent whatsoever is used to assist the infiltration, there is no need to dry the composite membrane impregnated with the polymer electrolyte precursor.

According to the present invention, the polymer electrolyte precursor in the composite membrane is transformed into the polymer electrolyte by hydrolysis. A known method should be employed for the hydrolysis of the polymer electrolyte precursor. Generally, the composite membrane should be treated with an aqueous alkaline solution of potassium hydroxide, sodium hydroxide, or the like, and thereafter further treated with an acidic aqueous solution of hydrochloric acid, sulfuric acid, nitric acid, or the like. In the case of the polymer electrolyte precursor expressed by the earlier given general formula (1), the sulfonyl fluoride group (-SO₂F) at the end of the side chain is converted to a sulfonic acid group (-SO₃H) by hydrolysis. In the thus transformed solid polymer electrolyte, the ion-exchange capacity expressed in terms of equivalent weight EW (molecular weight per sulfonic acid group) is preferably in the range of 600 to 1100 g/eq, and more preferably in the range of 700 to 1000 g/eq. Further, an organic solvent such as dimethyl sulfoxide may optionally be added in the hydrolysis treatment solution in order to enhance the ability of the hydrolysis treatment solution to permeate the polymer electrolyte precursor.

A method for fabricating a reinforced solid polymer electrolyte membrane according to the second mode of the present invention includes the steps of: preparing a sheet-like porous reinforcing member and a polymer electrolyte precursor; obtaining a composite membrane in which at least a portion of the polymer electrolyte precursor is impregnated into the sheet-like porous reinforcing member so as to form a composite structure therewith by causing the polymer electrolyte precursor to infiltrate into the sheet-like porous reinforcing member, in the absence of a solvent, at a first temperature lower than the melting point of the sheet-like porous reinforcing member; heat-treating the composite membrane at a second temperature higher than the melting point of the sheet-like porous reinforcing member but lower than the thermal decomposition temperature thereof; and transforming the polymer electrolyte precursor into a polymer electrolyte by hydrolyzing the polymer electrolyte precursor.

The difference from the above-described first mode of the present invention is that the step of causing the polymer electrolyte precursor to infiltrate into the sheet-like porous reinforcing member at a temperature higher than the melting point of the sheet-like porous reinforcing member is divided between the step of causing the polymer electrolyte precursor to infiltrate into the sheet-like porous reinforcing member at the first temperature which is lower than the melting point of the sheet-like porous reinforcing member and the step of heat-treating the composite membrane at the second temperature which is higher than the melting point of the sheet-like porous reinforcing member. In other words, the first mode of the present invention carries out the infiltration step and the heat-treating step at the same time. The second mode of the present invention, which performs the infiltration step and the heat-treating step separately, is advantageous in that the uniformity in the membrane thickness after the infiltration is further enhanced.

The infiltration temperature according to the second mode of the present invention is a temperature that lies intermediate between the melting point of the sheet-like porous reinforcing member and the melting temperature of the polymer electrolyte precursor, and generally it lies in the range of 150 to 250°C, and preferably in the range of 170 to 230°C. On the other hand, the time required for the infiltrating varies depending on the characteristics such as the thickness, porosity, and average pore size of the porous reinforcing member in each specific application and on the physical properties such as the melt viscosity of the polymer electrolyte precursor and its infiltration temperature, but generally an infiltration time of 5 to 30 minutes will suffice for the purpose. According to the second mode of the present invention, a composite membrane in which at least a portion of the polymer electrolyte precursor is impregnated into the sheet-like porous reinforcing member so as to form a composite structure therewith can be obtained by causing the polymer electrolyte precursor to infiltrate into the sheet-like porous reinforcing member as described above.

According to the second mode of the present invention, the thus obtained composite membrane is heat-treated at the second temperature which is higher than the melting point of the sheet-like porous reinforcing member but lower than the thermal decomposition temperature thereof. When the polymer electrolyte precursor is heat-treated at a temperature higher than the melting point of the sheet-like porous reinforcing member, the adhesion between the polymer electrolyte and the sheet-like porous reinforcing member markedly increases. The heat-treatment temperature according to the second mode of the present invention is determined by considering the thermal decomposition temperature and melting point of the sheet-like porous reinforcing member and the melting temperature of the polymer electrolyte precursor, as in the case of the first mode of the present invention, and it should be set to at least 300°C, preferably 330°C or higher, and more preferably 340°C or higher. On the other hand, the time required for the heat treatment varies depending on the characteristics such as the thickness, porosity, and average pore size of the porous reinforcing member in each specific application and on the physical properties such as the melt viscosity of the polymer electrolyte precursor and its heat-treatment temperature, but generally a heat-treatment time of 5 to 15 minutes will suffice for the purpose. The sheet-like porous reinforcing member, polymer electrolyte precursor, hydrolysis, etc., are the same as those described in the first mode of the present invention.

A membrane electrode assembly for a solid polymer fuel cell can be constructed by providing electrode layers on both sides of the solid polymer electrolyte obtained in accordance with the first or second mode of the present invention. The material for the electrode layers used in the membrane electrode assembly according to the present invention is not specifically limited, but any prior known one can be used, as long as it contains catalyst particles and an ion exchange resin. The catalyst used here usually comprises an electrically conductive material having carried thereon catalyst particles. For the catalyst particles, any material that exhibits catalytic activity for hydrogen oxidation reaction or oxygen reduction reaction can be used, examples including platinum (Pt) and other noble metals, or iron, chromium, nickel, etc., and their alloys. For the electrically conductive material, carbon-based particles, such as carbon black, activated carbon, graphite, etc., are preferable, and among others, fine powdered particles are advantageously used. In a typical example, noble metal particles, for example, Pt particles, or alloy particles of Pt and other metal, are carried on carbon black particles having a surface area of 20 m²/g or larger. In particular, for the anode catalyst, when using a fuel, such as methanol, that contains carbon monoxide (CO), it is preferable to use alloy particles of Pt and ruthenium (Ru) because Pt alone is easily poisoned by CO. The ion exchange resin used in the electrode layer is a material that supports the catalyst and that serves as a binder when forming the electrode layer, and has the role of providing a passage through which ions, etc., formed by catalyst reaction move. For such an ion exchange resin, a similar one to that described earlier in connection with the polymer electrolyte membrane can be used. It is preferable to form the electrode layer in a porous structure to maximize the surface area where the catalyst contacts the fuel gas, such as hydrogen or methanol, on the anode side or the oxidizer gas, such as oxygen or air, on the cathode side. The amount of catalyst contained in the electrode layer is preferably in the range of 0.01 to 1 mg/cm², and more preferably in the range of 0.1 to 0.5 mg/cm². The thickness of the electrode layer is generally in the range of 1 to 20 µm, and preferably in the range of 5 to 15 µm.

The membrane electrode assembly for use in the solid polymer fuel cell further includes a gas diffusion layer. The gas diffusion layer is a sheet member having electrical conductivity and air permeability. In a typical example, the gas diffusion layer is prepared by applying water-repellent treatment to an air permeable, electrically conductive substrate such as carbon paper, carbon woven fabric, carbon nonwoven fabric, carbon felt, or the like. It is also possible to use a porous sheet formed from carbon-based particles and a fluorine-based resin. For example, it is possible to use a porous sheet prepared by molding carbon black into a sheet using polytetrafluoroethylene as a binder. The thickness of the gas diffusion layer is generally in the range of 50 to 500 µm, and preferably in the range of 100 to 200 µm.

The membrane electrode assembly or a membrane electrode assembly precursor sheet is fabricated by bonding together the electrode layers, gas diffusion layers, and solid polymer electrolyte membrane. For the bonding method, any prior known method can be employed, as long as solid bonding having low contact resistance can be accomplished without damaging the polymer electrolyte membrane. In accomplishing the bonding, first the anode electrode or cathode electrode is formed by combining the electrode layer with the gas diffusion layer, and then the electrode is bonded to the polymer electrolyte membrane. For example, an electrode-layer-forming coating liquid that contains catalyst particles and an ion exchange resin is prepared using a suitable solvent, and the liquid thus prepared is applied over a gas-diffusion-layer-forming sheet member to form the anode electrode or cathode electrode, and the resulting structure is bonded to the polymer electrolyte membrane by hot pressing. Alternatively, the electrode layer may first be combined with the polymer electrolyte membrane, and then the gas diffusion layer may be bonded to the electrode layer side. When combining the electrode layer with the polymer electrolyte membrane, a prior known method, such as a screen printing method, a spray coating method, or a decal method, can be used.

A solid polymer fuel cell stack can be assembled by stacking 10 to 100 cells of such membrane electrode assemblies in accordance with a prior known method, one on top of another with the anode and cathode of each cell located on the specified sides and with a separator plate and a cooling section interposed between each individual cell. The solid polymer fuel cell according to the present invention can also be used as a so-called direct methanol fuel cell that uses methanol as the fuel.

### EXAMPLES

The present invention will be described in detail below with reference to examples.

### TEST METHOD

### 1) Tensile test

Peel strength was measured using a tensile tester (AUTOGRAPH AG-I manufactured by Shimadzu) set at a crosshead rate of 50 mm/second.

### 2) Freeze/defreeze cycle test

A test specimen (15 × 15 cm) was placed in a one-liter polypropylene bottle containing 1 liter of water, and the bottle was hermetically sealed; then, the bottle was placed in a thermostatic chamber SH-220 manufactured by ESPEC and was subjected to a temperature cycle test, one cycle consisting of holding the temperature at -30°C for one hour and then at 100°C for one hour, and after completing 25 cycles, the test specimen was recovered from the thermostatic chamber and visually checked for delamination.

### Example 1

A polymer electrolyte precursor having an ion-exchange capacity IEC of 0.9 meq/g (Nafion (registered trademark) Resin R-1100 manufactured by DuPont) was formed into a 300-µm thick membrane by hot pressing at 180°C. The resulting polymer electrolyte precursor membrane was extruded at 90°C by a roll extruder to reduce the thickness to 40 µm. This polymer electrolyte precursor membrane was placed on a porous expanded PTFE membrane (melting point: 327°C) having a thickness of 8.5 µm, a porosity of 80%, an average pore size of 0.5 µm, a tensile strength of 45 MPa, and a weight per unit area of 4.0 g/m², which was then heated at 200°C for 30 minutes, causing a portion of the polymer electrolyte precursor membrane to infiltrate into the porous expanded PTFE membrane. Next, the membrane was turned over and was placed on another porous expanded PTFE membrane having the same structure as above, which was then heated at 200°C for 30 minutes, causing a portion on the opposite surface of the polymer electrolyte precursor membrane to infiltrate into the porous expanded PTFE membrane. To prevent the membrane from shrinking during heating, the four sides of the polymer electrolyte precursor membrane with both surfaces thereof infiltrated into the respective porous expanded PTFE membranes were fixed to a pin frame, and the entire membrane structure was heat-treated in an oven at 340°C for 10 minutes. After the heat treatment, the polymer electrolyte precursor membrane was immersed in an aqueous solution prepared by dissolving 15% by mass of potassium hydroxide and 30% by mass of dimethyl sulfoxide, and the solution was stirred at 60°C for 4 hours, thereby hydrolyzing the polymer electrolyte precursor with alkali. Subsequently, the membrane was immersed in 2 mol/L of hydrochloric acid, and the solution was stirred at 60°C for 3 hours. Thereafter, the membrane was washed with ion-exchange water, and was dried at 85°C for 4 hours, to obtain a solid polymer electrolyte membrane.

The thus fabricated solid polymer electrolyte membrane was cut a width of 1 cm and a length of 10 cm, and the peel strength between the solid polymer electrolyte membrane and the porous expanded PTFE membrane was measured using the above-mentioned tensile tester; the peel strength of Example 1 was 2.7 N/cm. In the freeze/defreeze cycle test, the number of cycles to fracture was 2850.

### Example 2

The two porous expanded PTFE membranes (melting point: 327°C) used in Example 1 were stacked together, on top of which the 40-µm thick polymer electrolyte precursor membrane fabricated in Example 1 was placed; then, the resulting structure was heated at 200°C for 30 minutes, causing a portion on one surface of the polymer electrolyte precursor membrane to infiltrate into the two porous expanded PTFE membranes. To prevent the membrane from shrinking during heating, the four sides of the polymer electrolyte precursor membrane with one surface thereof infiltrated into the porous expanded PTFE membranes were fixed to a pin frame, and the entire membrane structure was heat-treated in an oven at 340°C for 10 minutes. After the heat treatment, the polymer electrolyte precursor membrane was immersed in an aqueous solution prepared by dissolving 15% by mass of potassium hydroxide and 30% by mass of dimethyl sulfoxide, and the solution was stirred at 60°C for 4 hours, thereby hydrolyzing the polymer electrolyte precursor with alkali. Subsequently, the membrane was immersed in 2 mol/L of hydrochloric acid, and the solution was stirred at 60°C for 3 hours. Thereafter, the membrane was washed with ion-exchange water, and was dried at 85°C for 4 hours, to obtain a solid polymer electrolyte membrane. The thus fabricated solid polymer electrolyte membrane was cut a width of 1 cm and a length of 10 cm, and the peel strength between the solid polymer electrolyte membrane and the porous expanded PTFE membrane was measured using the above-mentioned tensile tester; the peel strength of Example 2 was 3.2 N/cm. In the freeze/defreeze cycle test, the number of cycles to fracture was 3200.

### Example 3

Two porous expanded PTFE membranes (melting point: 327°C), each having a thickness of 16 µm, a porosity of 80%, an average pore size of 0.1 µm, a tensile strength of 32 MPa, and a weight per unit area of 5.9 g/m², were stacked together, on top of which the 40-µm thick polymer electrolyte precursor membrane fabricated in Example 1 was placed; then, the resulting structure was heated at 200°C for 30 minutes, causing a portion on one surface of the polymer electrolyte precursor membrane to infiltrate into the two porous expanded PTFE membranes. To prevent the membrane from shrinking during heating, the four sides of the polymer electrolyte precursor membrane with one surface thereof infiltrated into the porous expanded PTFE membranes were fixed to a pin frame, and the entire membrane structure was heat-treated in an oven at 340°C for 10 minutes. After the heat treatment, the polymer electrolyte precursor membrane was immersed in an aqueous solution prepared by dissolving 15% by mass of potassium hydroxide and 30% by mass of dimethyl sulfoxide, and the solution was stirred at 60°C for 4 hours, thereby hydrolyzing the polymer electrolyte precursor with alkali. Subsequently, the membrane was immersed in 2 mol/L of hydrochloric acid, and the solution was stirred at 60°C for 3 hours. Thereafter, the membrane was washed with ion-exchange water, and was dried at 85°C for 4 hours, to obtain a solid polymer electrolyte membrane.

The thus fabricated solid polymer electrolyte membrane was cut a width of 1 cm and a length of 10 cm, and the peel strength between the solid polymer electrolyte membrane and the porous expanded PTFE membrane was measured using the above-mentioned tensile tester; the peel strength of Example 3 was 3.3 N/cm. In the freeze/defreeze cycle test, the number of cycles to fracture was 3450.

### Comparative example 1

A solid polymer electrolyte membrane was fabricated by repeating the process of Example 1, with the exception that the heat treatment (340°C for 10 minutes) was not performed. The resulting solid polymer electrolyte membrane was cut a width of 1 cm and a length of 10 cm, and the peel strength between the solid polymer electrolyte membrane and the porous expanded PTFE membrane was measured using the above-mentioned tensile tester; the peel strength of Comparative example 1 was 1.3 N/cm. In the freeze/defreeze cycle test, the number of cycles to fracture was 750.

### Comparative example 2

A polymer electrolyte resin solution having an ion-exchange capacity IEC of 0.9 meq/g (Nafion (registered trademark) SE-20192 manufactured by DuPont) was applied over an ethylene-tetrafluoroethylene copolymer (ETFE) film to form a coating with a thickness of 300 µm. Then, two porous expanded PTFE membranes (melting point: 327°C), each having a thickness of 10 µm, a porosity of 70%, an average pore size of 0.2 µm, a tensile strength of 45 MPa, and a weight per unit area of 4.0 g/m², were placed in contact with that coating, to produce an impregnated membrane. Next, the impregnated membrane was dried in a thermostatic chamber at 140°C for 5 minutes, to obtain a 40-µm thick solid polymer electrolyte membrane reinforced by the porous expanded PTFE membranes. The thus fabricated solid polymer electrolyte membrane was cut at a width of 1 cm and a length of 10 cm, and the peel strength between the solid polymer electrolyte membrane and the porous expanded PTFE membrane was measured using the above-mentioned tensile tester; the peel strength of Comparative example 2 was 1.1 N/cm. In the freeze/defreeze cycle test, the number of cycles to fracture was 250.

| | PEEL STRENGTH N/cm | NUMBER OF CYCLES TO FRACTURE |
|---|---|---|
| EXAMPLE 1 | 2.7 | 2850 |
| EXAMPLE 2 | 3.2 | 3200 |
| EXAMPLE 3 | 3.3 | 3450 |
| COMPARATIVE EXAMPLE 1 | 1.3 | 750 |
| COMPARATIVE EXAMPLE 2 | 1.1 | 250 |

As can be seen from the data of the peel strength and the number of cycles to fracture shown in Table 1, the adhesion between the solid polymer electrolyte and the porous reinforcing member in the solid polymer electrolyte membrane heat-treated at a temperature higher than the melting point of the porous reinforcing member is greatly improved compared with the case where such heat treatment was not performed (Comparative example 1) as well as the case where the membrane was fabricated by a casting method using a solvent (Comparative example 2).

### INDUSTRIAL APPLICABILITY

According to the present invention, since either the polymer electrolyte precursor is caused to infiltrate into the porous reinforcing member at a temperature higher than the melting point of the porous reinforcing member or the impregnated composite membrane is heat-treated at such a temperature, the adhesion between the solid polymer electrolyte and the porous reinforcing member, as indicated by the peel strength between them, markedly increases compared with the prior art. Accordingly, in the solid polymer electrolyte membrane reinforced according to the present invention, the durability against the dry/wet cycle or freeze/defreeze cycle dramatically improves.

## Claims

1. A method for fabricating a reinforced solid polymer electrolyte membrane, comprising the steps of:
preparing a sheet-like porous reinforcing member and a polymer electrolyte precursor;
obtaining a composite membrane in which at least a portion of said polymer electrolyte precursor is impregnated into said sheet-like porous reinforcing member so as to form a composite structure therewith by causing said polymer electrolyte precursor to infiltrate into said sheet-like porous reinforcing member, in the absence of a solvent, at a first temperature lower than the melting point of said sheet-like porous reinforcing member;
heat-treating said composite membrane at a second temperature higher than the melting point of said sheet-like porous reinforcing member but lower than the thermal decomposition temperature thereof; and transforming said polymer electrolyte precursor into a polymer electrolyte by hydrolyzing said polymer electrolyte precursor,
wherein said polymer electrolyte precursor contains a polymer expressed by the general formula 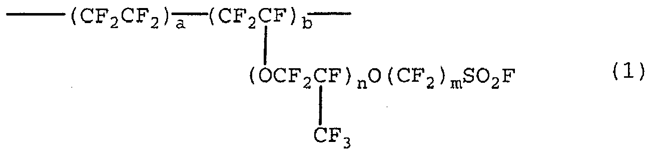 (where a:b = 1:1 to 9:1, a+b = 100 or larger, m = 2 to 6, n = 0, 1, 2).

2. A method as claimed in claim 1, wherein a peel strength between said sheet-like porous reinforcing member and said polymer electrolyte in said reinforced solid polymer electrolyte membrane is 2N/cm or greater.

3. A method as claimed in any one of claims 1 to 2, wherein said second temperature or said temperature lower than said thermal decomposition temperature is 300°C or higher.

4. A method as claimed in claim 1, wherein m = 2 in said general formula (1).

5. A method as claimed in any one of claims 1 to 4, wherein said sheet-like porous reinforcing member is formed from a porous expanded polytetrafluoroethylene.

6. A solid polymer electrolyte membrane fabricated by a method as claimed in any one of claims 1 to 5.

7. A membrane electrode assembly for use in a solid polymer fuel cell, constructed by providing electrode layers on both sides of the solid polymer electrolyte membrane of claim 6.

8. A solid polymer fuel cell comprising the membrane electrode assembly of claim 7.

## Patentansprüche

1. Verfahren zur Herstellung einer verstärkten festen Polymerelektrolymembran, umfassend die Schritte des:
Herstellens eines plattenähnlichen porösen verstärkenden Teils und eines Polymerelektrolytvorläufers;
Beschaffens einer Verbundmembran, in der mindestens ein Teil des Polymerelektrolytvorläufers in das plattenähnliche poröse verstärkende Teil imprägniert ist, um eine Verbundstruktur damit durch Verursachen zu bilden, dass der Polymerelektrolytvorläufer in das plattenähnliche poröse verstärkende Teil in Abwesenheit eines Lösungsmittels, bei einer ersten Temperatur, die niedriger ist als der Schmelzpunkt des plattenähnlichen porösen verstärkenden Teils, einfiltriert;
Hitzebehandelns der Verbundmembran bei einer zweiten Temperatur, die höher ist als der Schmelzpunkt des plattenähnlichen porösen verstärkenden Teils, jedoch niedriger als die Wärmezersetzungstemperatur davon; und Umwandelns des Polymerelektrolytvorläufers in einen Polymerelektrolyt durch Hydrolysieren des Polymerelektrolytvorläufers,
wobei der Polymerelektrolytvorläufer ein Polymer enthält, das durch die allgemeine Formel 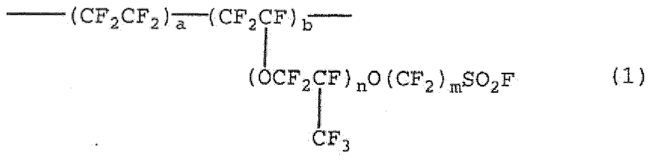
ausgedrückt wird
(wobei a:b = 1:1 bis 9:1, a+b = 100 oder mehr, m = 2 bis 6, n= 0, 1, 2 ist).

2. Verfahren nach Anspruch 1, wobei eine Abschälfestigkeit zwischen dem plattenähnlichen porösen verstärkenden Teil und dem Polymerelektrolyt in der verstärkenden festen Polymerelektrolytmembran 2 N/cm oder mehr beträgt.

3. Verfahren nach einem der Ansprüche 1 bis 2, wobei die zweite Temperatur oder die Temperatur, die niedriger ist als die Wärmezersetzungstemperatur, 300°C oder mehr beträgt.

4. Verfahren nach Anspruch 1, wobei m = 2 in der allgemeinen Formel (1) ist.

5. Verfahren nach einem der Ansprüche 1 bis 4, wobei das plattenähnliche poröse verstärkende Teil aus einem porösen expandierten Polytetrafluorethylen gebildet ist.

6. Feste Polymerelektrolytmembran, die durch ein Verfahren nach einem der Ansprüche 1 bis 5 hergestellt wird.

7. Membranelektrodenzusammenbau zur Verwendung in einer festen Polymerbrennstoffzelle, die durch Bereitstellen von Elektrodenschichten auf beiden Seiten der festen Polymerelektrolytmembran nach Anspruch 6 konstruiert wird.

8. Feste Polymerbrennstoffzelle umfassend den Membranelektrodenzusammenbau nach Anspruch 7.

## Revendications

1. Procédé de fabrication d'une membrane électrolytique polymère solide renforcée, comprenant les étapes de:
préparation d'un élément de renforcement poreux de type feuille et d'un précurseur électrolytique polymère;
obtention d'une membrane composite dans laquelle au moins une portion dudit précurseur électrolytique polymère est imprégnée dans ledit élément de renforcement poreux de type feuille afin de former une structure composite avec celui-ci en provoquant l'infiltration dudit précurseur électrolytique polymère dans ledit élément de renforcement poreux de type feuille, en l'absence de solvant, à une première température inférieure au point de fusion dudit élément de renforcement poreux de type feuille;
traitement thermique de ladite membrane composite à une seconde température supérieure au point de fusion dudit élément de renforcement poreux de type feuille mais inférieure à sa température de décomposition thermique; et
transformation dudit précurseur électrolytique polymère en un électrolyte polymère par l'hydrolyse dudit précurseur électrolytique polymère,
dans lequel ledit précurseur électrolytique polymère contient un polymère exprimé par la formule générale 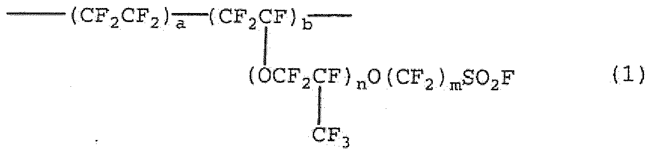
(où a:b = 1:1 à 9:1, a + b = 100 ou supérieur, m = 2 à 6, n = 0, 1, 2).

2. Procédé tel que revendiqué selon la revendication 1, dans lequel une résistance au décollement entre ledit élément de renforcement poreux de type feuille et ledit électrolyte polymère dans ladite membrane électrolytique polymère solide renforcée est de 2 N/cm ou supérieure.

3. Procédé tel que revendiqué selon l'une quelconque des revendications 1 à 2, dans lequel ladite seconde température ou ladite température inférieure à la dite température de décomposition thermique est de 300°C ou supérieure.

4. Procédé tel que revendiqué selon la revendication 1, dans lequel m = 2 dans ladite formule générale (1).

5. Procédé tel que revendiqué selon l'une quelconque des revendications 1 à 4, dans lequel ledit élément de renforcement poreux de type feuille est formé à partir d'un polytétrafluoroéthylène expansé poreux.

6. Membrane électrolytique polymère solide fabriquée à partir d'un procédé tel que revendiqué selon l'une quelconque des revendications 1 à 5.

7. Jeu d'électrodes à membrane pour l'utilisation dans une pile à combustible polymère solide, construit en fournissant des couches d'électrode sur les deux faces de la membrane électrolytique polymère solide selon la revendication 6.

8. Pile à combustible polymère solide comprenant le jeu d'électrodes à membrane selon la revendication 7.
